Europäisches Patentamt

(19) European Patent Office

Office européen des brevets

(11) Publication number: **0 014 561**
**B1**

(12) **EUROPEAN PATENT SPECIFICATION**

(45) Date of publication of patent specification: **04.04.84**

(51) Int. Cl.³: **F 16 G 5/06**

(21) Application number: **80300274.0**

(22) Date of filing: **30.01.80**

(54) **Power transmission belt of the raw-edge type.**

(30) Priority: **08.02.79 JP 15626/79**

(43) Date of publication of application:
**20.08.80 Bulletin 80/17**

(45) Publication of the grant of the patent:
**04.04.84 Bulletin 84/14**

(84) Designated Contracting States:
**CH DE FR GB IT NL SE**

(56) References cited:
**FR - A - 2 374 567**
**US - A - 2 822 856**
**US - A - 3 469 001**
**US - A - 3 479 245**
**US - A - 3 564 933**
**US - A - 3 800 610**
**US - A - 3 872 735**
**US - A - 3 981 206**
**US - A - 4 024 773**

(73) Proprietor: **MITSUBOSHI BELTING LTD.**
**No. 1-21, Hamazoedori 4-Chome Nagata-ku**
**Kobe-shi Hyogo (JP)**

(72) Inventor: **Imamura, Junji**
**No. 501-20, Minbudani Shioya-cho**
**Tarumi-ku Kobe-shi Hyogo (JP)**

(74) Representative: **Cooper, Derek Robert et al,**
**Marks & Clerk Alpha Tower Suffolk Street**
**Queensway**
**Birmingham B1 1TT (GB)**

Power transmission belt of the raw-edge type

This invention relates to power transmission belts of the raw-edge type.

Generally speaking, power transmission belts comprise a layer of tensile members extending longitudinally of the belt and embedded between a compression section and a tension section which are disposed respectively inwardly and outwardly of the tensile member layer. Such belts must be highly flexible so that they rarely become cracked, and must not be deformed by the pressure caused when the belt is located in a pulley groove.

One example of this type of belt is disclosed in US—A—3469001, wherein a rubbered fabric is bonded to a surface of the compression section which forms the radially inner surface of the belt. The belt also has randomly oriented short fibres incorporated into the tension and compression sections. Other examples are disclosed in US—A—4024773 and FR—A—2374567, wherein either the tension and compression sections are formed from layers of rubbered fabric, or the sections have rubbered fabric bonded in lamination to both the outward surface of the tension section and the inward surface of the compression section. In these two documents, short fibres are again incorporated into the tension and compression sections, but instead of being oriented randomly they extend transversely of the belt.

All of these belts achieve a measure of resistance against cracking, but the presence of the respective rubbered fabric layers imposes a restriction on the longitudinal stretchability of the belt. This latter problem can in principle be overcome to a certain extent by employing as the rubbered fabric a structure of the type disclosed for example in US—A—3872735, wherein the fabric has high stretchability in one direction (which can be arranged to be the longitudinal direction of the belt). However, this will not necessarily overcome the problem of deformation of the belt in a pulley groove.

It is an object of the invention to provide an improved power transmission belt of the raw-edge type which overcomes the defects listed above.

According to the invention, such a belt comprises a layer of tensile members extending longitudinally of the belt and embedded between a compression section and a tension section disposed respectively inwardly and outwardly of the tensile member layer, and at least one ply of rubbered fabric which is highly stretchable in the longitudinal direction of the belt, at least the compression section including a rubber layer having embedded therein short fibres which extend transversely of the belt. The improvement provided by the invention resides in the feature that the said at least only ply of rubbered fabric is embedded in lamination in an inward portion of the compression section.

The rubbered fabric can be a plain or a twill weave fabric, and is preferably woven from crimped nylon yarns which have been treated to give them a woolly texture and which extend generally longitudinally of the belt, and cotton yarns, nylon yarns or polyester yarns which extend transversely of the belt. The crimped nylon yarns desirably form an angle of 0° to 40° with the longitudinal axis of the belt.

Embodiments of the present invention will now be described, by way of example, with reference to the accompanying drawings, in which:—

Figure 1 is a schematic perspective view of a longitudinal section of a power transmission V-belt according to a first embodiment of the present invention;

Figure 2 is a transverse cross-section through a power transmission V-belt according to a second embodiment of the present invention;

Figure 3 is a plan view of a woven fabric;

Figure 4 shows the fabric illustrated in Figure 3 after modification for use in the power transmission belts of Figures 1 and 2;

Figure 5 is a schematic plan view of a further form of fabric for use in a power transmission belt according to the present invention;

Figure 6 is a schematic perspective view of a longitudinal section of a power transmission V-belt according to a third embodiment of the present invention;

Figure 7 is a plan view of a fabric;

Figure 8 shows the fabric illustrated in Figure 7 after modification for use in the power transmission belt of Figure 6;

Figure 9 is a plan view of a still further form of fabric for use in a power transmission belt according to the present invention; and

Figure 10 is a transverse cross-section through a power-transmission V-belt according to a fourth embodiment of the present invention.

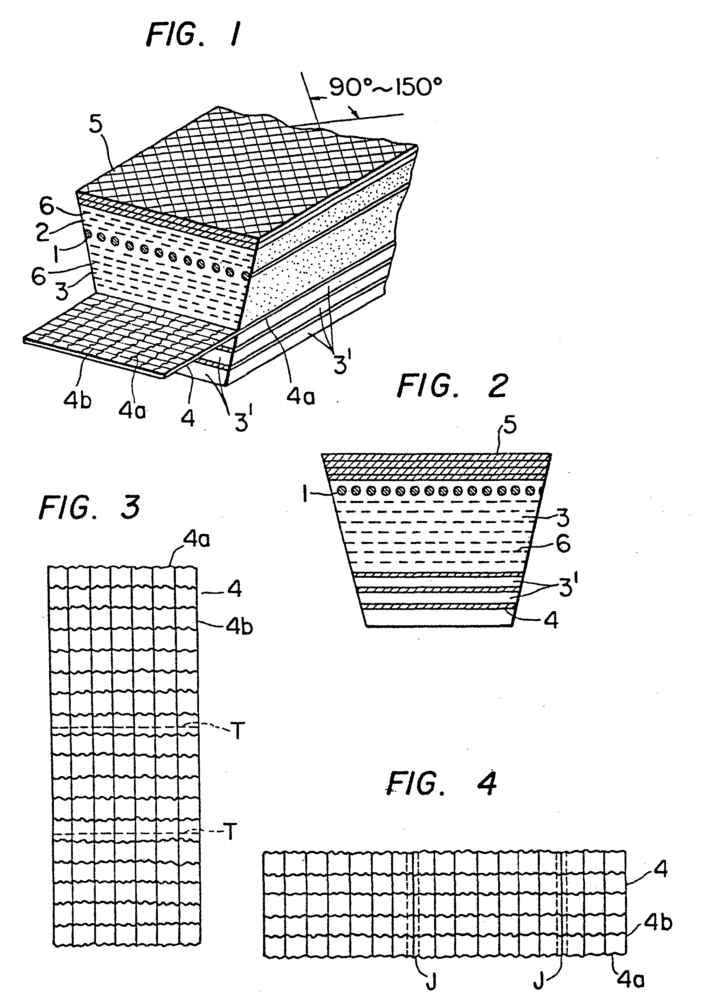

The power transmission V-belt shown in Figure 1 is of the raw-edge type and comprises generally a layer of high strength, rope-shaped tensile members 1 (for example made of polyester fibres, nylon fibres or aromatic polyamide fibres, particularly those sold under the trade name "Kevlar") embedded between a tension section 2 and a compression section 3 disposed respectively outwardly and inwardly of the tensile member layer. Each of the sections 2 and 3 includes a rubber layer whose side-pressure durability is increased by the addition of 10 to 30 parts by weight of short (i.e. 2 mm to 10 mm long) fibres 6 which extend transversely of the belt. The fibres 6 are obtained by cutting natural fibres (such as cotton fibres), synthetic fibres (such as nylon fibres, vinylon fibres or rayon fibres), artificial fibres of non-organic fibres (such as glass fibres). At least one ply (preferably two to five plys) of rubbered fabric 5 is bonded in lamination to an outward surface of the rubber layer of tension section 2 in such a manner that the warps and wefts thereon extend obliquely with respect to the longitudinal axis of the belt, the warps and wefts being mutually inclined at a wide cross-angle of 90° to 150°.

At least one ply of rubbered fabric 4, which is different from the bias fabric 5, is embedded in lamination in an inward portion 3' of the rubber layer of the compression section 3. The rubbered fabric 4 is provided to improve stretchability in the longitudinal direction of the belt and side-pressure durability in the lateral direction of the belt, and does this in co-operation with the tension rubber layer 2 and the compression rubber layer 3 containing the laterally-oriented short fibres 6. To this end, each ply of the rubbered fabric 4 is woven from crimped nylon yarns 4a which have been treated to give them a woolly texture, which extend parallel to the longitudinal axis of the belt, and cotton yarns, nylon yarns or polyester yarns 4b high in rigidity which extend at right-angles to the longitudinal axis of the belt. The fabric 4 is subjected to adhesion treatment, and then one or both surfaces thereof are covered with a predetermined thickness of rubber of the same quality as used in the compression rubber layer 3. The number of plys of rubbered fabric 4 depends on the thickness of the compression rubber layer: in general, two to six plys are provided.

Figure 2 shows a modified form of V-belt in which no tension rubber layer is provided outward of the tensile member layer 1. Instead, the tension section includes a number of plys of wide cross-angle fabric 5 which are bonded directly to an outward surface of the tensile member layer 1. Stretchability of the belt in its longitudinal direction is still obtained because of the presence of the rubbered fabric 4 in the compression section 3, while the rigidity of the belt in the lateral direction is improved.

The manner in which the fabric 4 used in the V-belts of Figures 1 and 2 is produced will now be explained with reference to Figures 3 and 4. Initially, as shown in Figure 3, a plain weave fabric is obtained by weaving wefts 4a made of crimped nylon yarns subjected to woolly treatment and warps 4b made of cotton yarns, nylon yarns, or polyester yarns. The fabric is then cut in a direction parallel to the wefts 4a as indicated by broken lines T, and the resultant pieces are joined side-to-side along join lines J to produce a length of fabric in which the wefts 4a extend longitudinally thereof, as shown in Figure 4. The length of fabric is then inserted in the belt such that the wefts 4a are parallel to the longitudinal axis thereof.

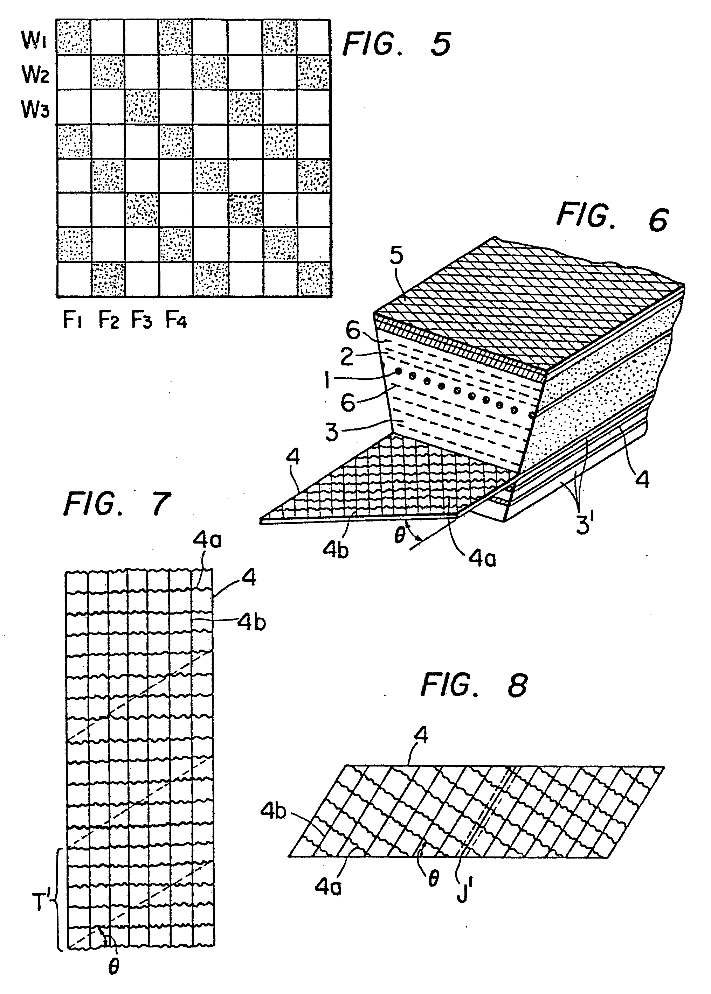

As an alternative to plain weave, the fabric 4 can be of twill weave, such as is illustrated in Figure 5. The twill weave fabric comprises warps $W_1$, $W_2$, $W_3$ ... made of crimped nylon yarn subjected to woolly treatment and wefts $F_1$, $F_2$, $F_3$, $F_4$ ... made of cotton yarn or nylon yarn. Each warp Wi (i=1, 2, 3 ...) passes over the weft $F_{3n+i}$ and under the next two wefts $F_{3n+i+1}$ and $F_{3n+i+2}$ (n=0, 1, 2 ...). Thus, each weft Fj (j=1, 2, 3 ...) passes under the warp $W_{3n+j}$ and over the next two warps $W_{3n+j+1}$ and $W_{3n+j+2}$ (n=0, 1, 2 ...). The positions of the exposed warps and wefts form diagonal lines extending downwardly to the right, as viewed in Figure 5, as a result of which the woven pattern has oblique lines.

The number of yarn crossover points in a twill weave fabric is much smaller than in a plain weave fabric. Therefore, the spaces between the yarns especially at the crossover points are sufficiently filled with the rubber covering, and contact between the warps and wefts is prevented when the fabric is bent so that the service life of the belt is increased.

In the V-belts of Figures 1 and 2, the stretchable yarns 4a extend parallel to the longitudinal axis of the belt and the rigid yarns 4b extend at right-angles thereto. Because the V-belts are of the raw-edge type, the stretchable yarns 4a can be exposed with a resultant tendency for them to become frayed out of the belt. In order to overcome this problem, the fabric 4 can be arranged so that the stretchable yarns 4a are inclined at an angle $\theta$ to the longitudinal axis of the belt, as illustrated in Figure 6. Preferably, the angle $\theta$ is 0° to 40°. If an angle greater than 40° is used, then the direction of extent of the stretchable yarns 4a approaches the lateral direction of the belt, and the stretchability of the belt in its longitudinal direction is accordingly reduced. Similarly, the direction of extent of the rigid yarns 4b moves away from the lateral direction of the belt, as a result of which the lateral rigidity of the belt is also reduced.

The manner in which the fabric 4 used in the V-belt of Figure 6 is produced will now be explained with reference to Figures 7 and 8. Initially, as shown in Figure 7, a plain weave fabric is obtained by weaving wefts 4a made of crimped nylon yarns subjected to woolly treatment and warps 4b made of nylon yarns or polyester yarns. The fabric is cut at an angle $\theta$ to the wefts 4a as indicated by broken lines T', and the resultant pieces are joined side-to-side along join lines J' as indicated in Figure 8. A length of fabric is thus produced in which the wefts 4a are inclined at an angle $\theta$ to the longitudinal direction of the fabric. The length of fabric is then embedded in the belt so that the wefts 4a become inclined at an angle $\theta$ to the longitudinal direction of the belt.

As an alternative to plain weave, the fabric used in the belt of Figure 6 can be a twill weave produced in an analogous manner to that described above with reference to Figures 7 and 8.

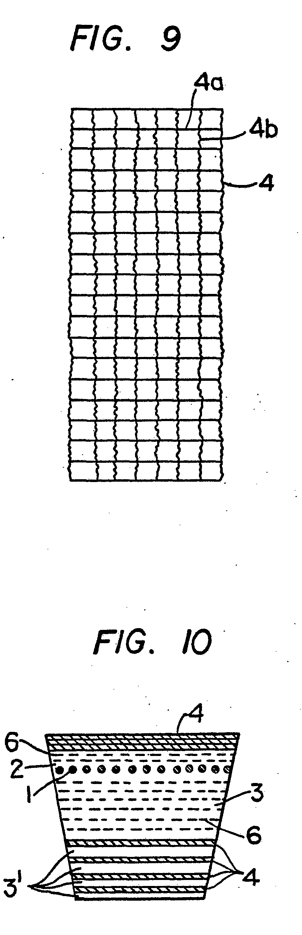

In the V-belts of Figures 1, 2 and 6, the fabric 4 is produced by cutting an initial weave laterally and joining the resultant pieces side-to-side. The joins J, J' between the fabric pieces are thicker than the remainder of the fabric. Consequently, when the fabric is embedded in the belt, the thickness of the latter becomes non-uniform resulting in vibration of the belt in operation. This difficulty can be eliminated by producing the fabric as indicated in Figure 9, wherein the crimped nylon yarns subjected to woolly treatment now form the warps 4b of the weave and the rigid nylon yarns or polyester yarns form the wefts 4a. The fabric can be plain weave or twill weave. Because the crimped nylon yarns subjected to woolly treatment extend longitudinally of the fabric thus produced, the fabric can be used as it is and it is unnecessary to cut the fabric laterally and join the resultant pieces side-to-side.

Where it is desired to increase the longitudinal stretchability and the lateral rigidity of both the tension section 2 and the compression section 3, one or more plys of the rubbered fabric 4 can be bonded in lamination to an outward surface of the tension rubber layer in addition to such plys being embedded in lamination in the inward portion 3' of the compression rubber layer, as depicted in Figure 10.

The above described belts can be manufactured by a method in which the fabric 4 after being covered with rubber is wound spirally around a cylindrical drum. Thus, fabric layers are formed on the drum by a rubbered fabric having no joins, enabling a V-belt of uniform thickness to be obtained.

The raw-edge type power transmission V-belts described above have the following merits:—

(1) In the rubbered fabric 4, the crimped nylon yarns subjected to woolly treatment extend generally longitudinally of the belt: therefore the longitudinal flexibility of the belt is increased and it is possible to prevent the belt from dropping in a pulley groove during operation.

(3) The layers of fabric 4 are cushioned by laterally of the belt. This, coupled with the presence of the laterally-oriented short fibres 6 in the tension and compression rubber layers, improves the side pressure durability of the belt and it is therefore possible to prevent the belt from dropping in a pulley groove during operation.

(3) The layers of fabric 4 are cushioned by their rubber covering, and hence the service life of the belt is increased.

(4) Where the crimped nylon yarns subjected to woolly treatment are inclined to the longitudinal direction of the belt, it is possible to prevent these yarns from becoming frayed out of the belt.

(5) Where the fabric 4 is produced from warps made of crimped nylon yarns subjected to woolly treatment and wefts made of cotton yarns, nylon yarns or polyester yarns, it is possible to form the laminated fabric layers with no joints. Consequently, vibration of the belt in operation can be prevented.

Thus the power transmission belt of the present invention can satisfy the conditions required for improved power transmission performance.

## Claims

1. A power transmission belt of the raw-edge type, comprising a layer of tensile members (1) extending longitudinally of the belt and embedded between a compression section (3) and a tension section (2) disposed respectively inwardly and outwardly of the tensile member layer, and at least one ply of rubbered fabric (4) which is highly stretchable in the longitudinal direction of the belt, at least the compression section (3) including a rubber layer having embedded therein short fibres (6) which extend transversely of the belt, characterised in that said at least one ply of rubbered fabric (4) is embedded in lamination in an inward portion (3') of the compression section (3).

2. A power transmission belt as claimed in Claim 1, wherein the rubbered fabric (4) is a plain weave fabric.

3. A power transmission belt as claimed in Claim 1, wherein the rubbered fabric (4) is a twill weave fabric.

4. A power transmission belt as claimed in Claim 1, 2 or 3, wherein the rubbered fabric (4) is woven from crimped nylon yarns (4a) which have been treated to give them a woolly texture and which extend generally longitudinally of the belt, and cotton yarns, nylon yarns or polyester yarns (4b) which extend transversely of the belt.

5. A power transmission belt as claimed in Claim 4, wherein the crimped nylon yarns (4a) form an angle ($\theta$) of 0° to 40° with the longitudinal axis of the belt.

6. A power transmission belt as claimed in Claim 5, wherein the crimped nylon yarns (4a) are parallel to the longitudinal axis of the belt.

7. A power transmission belt as claimed in Claims 4, 5 or 6, wherein the crimped nylon yarns form wefts and the cotton yarns, nylon yarns or polyester yarns form warps of the weave.

8. A power transmission belt as claimed in any preceding claim, wherein two to six plys of said rubbered fabric (4) are provided.

9. A power transmission belt as claimed in any preceding claim, wherein both the tension section (2) and the compression section (3) include a rubber layer having embedded therein short fibres (6) which extend transversely of the belt.

10. A power transmission belt as claimed in any one of Claims 1 to 8, wherein the tension section (2) includes at least one ply of fabric (5) bonded in lamination to an outward surface of the tensile member layer (1).

11. A power transmission belt as claimed in any one of Claims 1 to 9, wherein an outward surface of the tension section (2) has bonded in lamination thereto at least one ply of rubbered fabric (5) woven from warps and wefts made of cotton yarn and mutually inclined at 90° to 150°.

12. A power transmission belt as claimed in Claim 11, wherein two to five plys of the rubbered fabric (5) are bonded to the tension section (2).

**Patentansprüche**

1. Kraftübertragungsriemen des Rohkanten-Typs mit einer Lage von Zuggliedern (1), die sich längs des Riemens erstreckt und zwischen einem Druckteil (3) und einem Zugteil (2) eingebettet ist, welche innerhalb bzw. außerhalb der Zugglieder-Lage angeordnet sind, und wenigstens einer Lage gummierten Gewebes (4), das in Längsrichtung des Riemens hochdehnbar ist, wobei wenigstens der Druckteil (3) eine Gummilage mit darin eingebetteten, sich quer zum Riemen erstreckenden kurzen Fasern (6) enthält, dadurch gekennzeichnet, daß die genannte eine Lage von gummiertem Gewebe (4) in Sandwich-Anordnung in einem inneren Teil (3') des Druckteils (3) eingebettet ist.

2. Kraftübertragungsriemen nach Anspruch 1, in welchem das gummierte Gewebe (4) ein Leinengewebe ist.

3. Kraftübertragungsriemen nach Anspruch 1, in welchem das gummierte Gewebe (4) ein Gewebe in Köperbindung ist.

4. Kraftübertragungsriemen nach Anspruch 1, 2 oder 3, in welchem das gummierte Gewebe (4) gewebt ist aus gekräuselten Nylongarnen (4a), die behandelt wurden, um ihnen eine wollige Struktur zu geben und die sich allgemein längs des Riemens erstrecken, un Baumwollgarnen, Nylongarnen oder Polyestergarnen (4b), die sich quer zum Riemen erstrecken.

5. Kraftübertragungsriemen nach Anspruch 4, in welchem die gekräuselten Nylongarne (4a) einen Winkel (θ) von 0° bis 40° mit der Längsachse des Riemens bilden.

6. Kraftübertragungsriemen nach Anspruch 5, in welchem die gekräuselten Nylongarne (4a) parallel zur Längsachse des Riemens sind.

7. Kraftübertragungsriemen nach Anspruch 4, 5 oder 6, in welchem die gekräuselten Nylongarne Schußfäden bilden, und die Baumwollgarne, Nylongarne oder Polyestergarne Kettfäden des Gewebes bilden.

8. Kraftübertragungsriemen nach irgendeinem der vorhergehenden Ansprüche, in welchem zwei bis sechs Lagen des genannten gummierten Gewebes (4) vorgesehen sind.

9. Kraftübertragungsriemen nach irgendeinem der vorhergehenden Ansprüche, in welchem der Zugteil (2) und der Druckteil (3) eine Gummilage mit darin eingebetteten, sich quer zum Riemen erstreckenden kurzen Fasern (6) enthalten.

10. Kraftübertragungsriemen nach irgendeinem der Ansprüche 1 bis 8, in welchem der Zugteil (2) wenigstens eine Gewebelage (5) enthält, die in Sandwich-Anordnung an einer Außenfläche der Zugglieder-Lage (1) befestigt ist.

11. Kraftübertragungsriemen nach irgendeinem der Ansprüche 1 bis 9, in welchem eine Außenfläche des Zugteils (2) wenigstens eine daran in Sandwich-Anordnung befestigte Lage gummierten Gewebes (5) aufweist, welches aus Kettfäden und Schußfäden gewebt ist, die aus Baumwollgarn bestehen und unter 90° bis 150° zueinander schräg angeordnet sind.

12. Kraftübertragungsriemen nach Anspruch 11, in welchem zwei bis fünf Lagen des gummierten Gewebes (5) an dem Zugteil (2) befestigt sind.

**Revendications**

1. Une courroie de transmission de puissance du type à bords bruts, comprenant une couche d'éléments de traction (1) qui s'étendent selon la longueur de la courroie et sont noyés entre une section de compression (3) et une section de tension (2) disposées respectivement à l'intérieur et à l'extérieur de la couche d'éléments de traction et au moins une épaisseur de tissu caoutchouté (4) qui est très extensible dans la direction longitudinale de la courroie, au moins la section de compression (3) comprenant une couche de caoutchouc dans laquelle sont noyées des fibres courtes (6) qui s'étendent transversalement à la courroie, caractérisée en ce que ladite au moins une épaisseur de tissu caoutchouté (4) est noyée en stratification dans une partie intérieure (3') de la section de compression (3).

2. Une courroie de transmission de puissance comme revendiquée dans la revendication 1, dans laquelle le tissu caoutchouté (4) est un tissu à armure unie.

3. Une courroie de transmission de puissance comme revendiquée dans la revendication 1, dans laquelle le tissu caoutchouté (4) est un tissu à armure de sergé.

4. Une courroie de transmission de puissance comme revendiquée dans la revendication 1, 2, ou 3, dans laquelle le tissu caoutchouté (4) est tissé à partir de fils de Nylon frisés (4a) qui ont été traités d'une façon qui leur donne une texture laineuse et qui s'étendent à peu près dans le sens de la longueur de la courroie, et des fils de coton, des fils de Nylon ou des fils de polyester (4b) qui s'étendent transversalement à la courroie.

5. Une courroie de transmission de puissance comme revendiquée dans la revendication 4, dans laquelle les fils de Nylon frisés (4a) forment un angle (θ) de 0° à 40° avec l'axe longitudinal de la courroie.

6. Une courroie de transmission de puissance comme revendiquée dans la revendication 5, dans laquelle les fils de Nylon frisés (4a) sont parallèles à l'axe longitudinal de la courroie.

7. Une courroie de transmission de puissance comme revendiquée dans la revendication 4, 5 ou 6, dans laquelle les fils de Nylon frisés (4a) forment les trames et les fils de coton, fils de Nylon ou fils de polyester forment les chaînes du tissage.

8. Une courroie de transmission de puissance comme revendiquée dans une revendication précédente quelconque dans laquelle il est prévu deux à six épaisseurs du tissu caoutchouté (4).

9. Une courroie de transmission de puissance comme revendiquée dans une revendication précédente quelconque, dans laquelle la section de tension (2) et la section de compression (3) comprennent chacune une couche de caoutchouc dans laquelle sont noyées des fibres courtes (6) qui s'étendent transversalement à la courroie.

10. Une courroie de transmission de puissance comme revendiquées dans l'une quelconque des revendications précédentes, dans laquelle la section de tension (2) comprend au moins une épaisseur de tissu (5) fixée en stratification sur une surface extérieure de la couche d'éléments de traction (1).

11. Une courroie de transmission de puissance comme revendiquée dans l'une quelconque des revendications 1 à 9, dans laquelle une surface extérieure de la section de tension (2) comporte, fixée en stratification, au moins une épaisseur de tissu caoutchoutée (5) tissée à partir de chaînes et de trames faites de fils de coton et inclinées les unes par rapport aux autres d'un angle de 90° à 150°.

12. Une courroie de transmission de puissance comme revendiquée dans la revendication 11, dans laquelle deux à cinq épaisseurs du tissu caoutchouté (5) sont fixées à la section de tension (2).

FIG. 1

FIG. 2

FIG. 3

FIG. 4

FIG. 5

FIG. 6

FIG. 7

FIG. 8

2

## FIG. 9

## FIG. 10